# EUROPEAN PATENT APPLICATION

(11) **EP 4 542 698 A1**
(43) Date of publication of application: **23.04.2025**
(21) Application number: 23922185.6
(22) Date of filing: 08.05.2023
(51) Int. Cl.: H01M 10/04, H01M 6/00

(54) **CASING MOUNTING DEVICE**

(30) Priority: 15.02.2023 CN 202320222408 U
(71) Applicant: Contemporary Amperex Technology (Hong Kong) Limited, Hong Kong (HK)
(72) Inventor: YANG, Jun, Ningde, Fujian 352100 (CN); YU, Dingshan, Ningde, Fujian 352100 (CN); ZHANG, Chengmei, Ningde, Fujian 352100 (CN)
(74) Representative: Ziebig Hengelhaupt Intellectual Property Attorneys Patentanwaltskanzlei PartGmbB
(86) International application number: PCT/CN2023/092753
(87) International publication number: WO 2024/169057

(57) **Abstract**

This application relates to the technical field of battery manufacturing, and provides an encasing device. The encasing device includes: a first bracket, where a riveting platform is disposed on the first bracket; a first flipping mechanism, configured to flip a battery shell; a first conveying sliding table, where the first conveying sliding table is disposed between the first flipping mechanism and the first bracket and configured to convey the battery shell to a grip site on the first bracket; a gripping mechanism, disposed on the first bracket, where the gripping mechanism includes a moving mechanism and a gripping piece connected to the moving mechanism, the gripping piece is configured to grip the battery shell from the grip site, and the moving mechanism is adapted to drive the gripping piece and the battery shell to move from the grip site to a position above the riveting platform; and a relocation mechanism, disposed on the first bracket, where the relocation mechanism is adapted to drive the battery shell to move toward a cell module and fit the cell module into the battery shell. The technical solution of this application can reduce space occupied by the device and improves the efficiency of assembling the battery shell and the cell module.

## Description

### CROSS-REFERENCE TO RELATED APPLICATIONS

This application claims priority to Chinese Patent Application No. 202320222408.8, filed on February 15, 2023 and entitled "ENCASING DEVICE", which is incorporated herein by reference in its entirety.

### TECHNICAL FIELD

This application relates to the technical field of battery manufacturing, and in particular, to an encasing device.

### BACKGROUND

The information provided in this section is merely background information related to this disclosure and does not necessarily constitute any prior art.

Currently, with the rapid development of new energy vehicles, power batteries are increasingly coming into the public's field of vision. A power battery includes a cell module and a shell. A production process of the power battery includes a series of steps such as assembling the cell module and a battery shell together, detecting dimensions after assembling, and riveting the cell module to the battery shell. In the related art, the overall structure of the equipment configured to mount the battery shell and the cell module is redundant and large, thereby leading to low space utilization, low mounting efficiency, and high cost of labor and material for mounting, commissioning, and routine maintenance.

### SUMMARY

An objective of this application is to provide an encasing device to reduce the overall space occupied by the device and improve the efficiency of assembling the battery shell and the cell module. This objective is achieved by the following technical solutions:

This application provides an encasing device. The encasing device includes: a first bracket, where a riveting platform is disposed on the first bracket; a first flipping mechanism, configured to flip a battery shell; a first conveying sliding table, where the first conveying sliding table is disposed between the first flipping mechanism and the first bracket and is configured to convey the flipped battery shell to a grip site on the first bracket; a gripping mechanism, disposed on the first bracket, where the gripping mechanism includes a moving mechanism and a gripping piece connected to the moving mechanism, the gripping piece is configured to grip the battery shell from the grip site, and the moving mechanism is adapted to drive the gripping piece and the battery shell to move from the grip site to a position above the riveting platform; and a relocation mechanism, disposed on the first bracket, where the relocation mechanism is adapted to drive the battery shell to move toward a cell module and fit the cell module into the battery shell.

The encasing device according to this application uses the first flipping mechanism to flip the battery shell over until the opening of the shell faces downward. Subsequently, the battery shell is conveyed to the grip site of the relocation mechanism by the first conveying sliding table, and then gripped and moved by the moving mechanism to a position above the riveting platform. At this time, the cell module is located on the riveting platform. Afterward, the gripping piece and the battery shell move toward the cell module as driven by the moving mechanism, and then the battery shell is wrapped around the cell module as driven by the relocation mechanism, thereby assembling the battery shell and the cell module together. The overall structure is relatively compact, thereby reducing the space occupied by the device, and improving the efficiency of assembling the battery shell and the cell module together.

In addition, the encasing device according to this application may be characterized by the following additional technical features:
In some embodiments of this application, the encasing device further includes: a second conveying sliding table, disposed on the first bracket and configured to convey the cell module to the riveting platform.

The cell module is conveyed to the riveting platform by the second conveying sliding table. At this time, the battery shell is located directly above the cell module. Subsequently, the relocation mechanism drives the battery shell to move toward the cell module, so that the cell module finally fits into the battery shell.

In some embodiments of this application, the first flipping mechanism includes: a second bracket; a fixing assembly, disposed on the second bracket and configured to fix the battery shell; clamping assemblies, disposed at two opposite ends of the second bracket respectively, and configured to clamp the battery shell and drive the battery shell to rise or fall; and a flipping assembly, disposed on the second bracket, and configured to drive the fixing assembly to flip over and drive the battery shell to flip over.

In an initial state, the opening of the battery shell faces upward. After the battery shell is fixed by the fixing assembly on the first bracket, the two opposite sides of the battery shell are clamped by the clamping assembly, and the battery shell is driven to move upward. Subsequently, by using the flipping assembly, the battery shell is flipped until the opening of the battery shell faces downward, so as to make it convenient to assemble the battery shell and the cell module together.

In some embodiments of this application, the moving mechanism includes: a first moving assembly, disposed on the first bracket, and adapted to move relative to the first bracket along a horizontal direction; and a second moving assembly, connected to the first moving assembly, and adapted to move relative to the first moving assembly along a vertical direction. The second moving assembly is connected to the gripping piece. The first moving assembly and the second moving assembly are adapted to drive the gripping piece and the battery shell to move to the riveting platform, and drive the battery shell to descend until the battery shell wraps around the cell module.

The first moving assembly and the second moving assembly are disposed on the first bracket, the second moving assembly is connected to the first moving assembly, and the gripping piece is disposed on the second moving assembly. In this way, upon completion of the gripping piece gripping the battery shell, when the first moving assembly moves relative to the first bracket along the horizontal plane, the first moving assembly can drive the second moving assembly and the gripping piece to move horizontally to a position above the riveting platform, and then the second moving assembly drives the gripping piece to move downward to a position above the cell module, and finally drives the battery shell to descend until the battery shell wraps around the cell module.

In some embodiments of this application, the gripping piece includes a hollow channel. The hollow channel is configured to be connected to a vacuumizing piece. The gripping piece is constrained by a limiting groove. The limiting groove fits dimensions of the battery shell. A side wall surface of the limiting groove is provided with a sucking hole. The sucking hole is configured to suck the battery shell in place during vacuumizing.

The gripping piece includes a limiting groove that fits the dimensions of the battery shell. The battery shell is held in the limiting groove when being gripped. When the gripping piece is held in the limiting groove, the sucking hole on the gripping piece can suck the battery shell in place. When the vacuumizing piece creates a vacuum, the sucking hole can let the battery shell open to a specified angle to facilitate assembling with the cell module.

In some embodiments of this application, the encasing device further includes a jack-up mechanism. The jack-up mechanism is disposed on the first bracket and configured to jack up the cell module when the cell module is conveyed to the riveting platform.

The j ack-up mechanism is located below the second conveying sliding table. When the cell module is conveyed to the riveting platform, the jack-up mechanism can jack up the cell module so that the battery shell can wrap around the cell module to facilitate the assembling of the cell module into the battery shell.

In some embodiments of this application, the relocation mechanism further includes: a first pressing mechanism, including a first pressing assembly and a second pressing assembly, where the first pressing assembly is configured to press the battery shell along a first direction on a horizontal plane after the battery shell and the cell module are assembled together, and the second pressing assembly is configured to press the battery shell along a second direction on the horizontal plane after the battery shell and the cell module are assembled together; and a second pressing mechanism, configured to press the cell module along a vertical direction after the battery shell and the cell module are assembled together. The first direction is perpendicular to the second direction.

When the battery shell wraps around the cell module, the first pressing assembly presses both sides of the battery shell along the first direction on the horizontal plane, and the second pressing assembly presses both sides of the battery shell separately along the second direction on the horizontal plane, and then the second pressing mechanism presses the battery shell along the vertical direction, so as to implement relative fixation between the cell module and the battery shell and prevent the cell module from falling off from the battery shell in subsequent processes.

In some embodiments of this application, the encasing device further includes: a detection mechanism, configured to detect dimensions of the battery shell assembled with the cell module.

The detection mechanism is configured to detect outline dimensions of the battery shell that is assembled with the cell module by the first pressing assembly and the second pressing assembly, so as to control the dimensions of the battery shell within a preset range.

In some embodiments of this application, the encasing device further includes a riveting mechanism. The riveting mechanism is disposed on one side of the riveting platform, and configured to rivet the battery shell and the cell module together.

The riveting mechanism is located on one side of the riveting platform and configured to rivet and weld the battery shell and the cell module together after the battery shell and the cell module are assembled together and pressed, so as to further improve the reliability of assembling of the cell module.

In some embodiments of this application, the encasing device further includes a second flipping mechanism disposed on the first bracket. The second flipping mechanism is configured to flip the battery shell riveted with the cell module.

After the battery shell and the cell module are riveted together, the battery shell is flipped over by the second flipping mechanism so that the opening of the battery shell faces upward for ease of transit to a next process.

In some embodiments of this application, the relocation mechanism further includes a transfer mechanism, disposed on the first bracket, and configured to transfer the battery shell and cell module riveted together.

When the battery shell is flipped over by the second flipping mechanism to make the opening face upward, the battery shell and cell module assembled together are transferred to a next process by the transfer mechanism.

In some embodiments of this application, two first flipping mechanisms and two first conveying sliding tables are provided. The two first flipping mechanisms are disposed on two sides of the first bracket respectively. Each of the two first conveying sliding tables is disposed between a corresponding first flipping mechanism and the first bracket.

With two first flipping mechanisms and two first conveying sliding tables disposed, the assembling is performed in two workspaces simultaneously without mutual interference, thereby further improving production efficiency, and at the same time, further reducing the space occupied by the device.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral or sign represents the same component. In the drawings:
FIG. 1 is a schematic structural diagram of an encasing device according to some embodiments of this application;
FIG. 2 is a schematic structural diagram of a first flipping mechanism according to some embodiments of this application;
FIG. 3 is a schematic structural diagram of a first conveying sliding table according to some embodiments of this application;
FIG. 4 is a schematic structural diagram of a local region of an encasing device according to some embodiments of this application;
FIG. 5 is a schematic structural diagram of another local region of an encasing device according to some embodiments of this application; and
FIG. 6 is a schematic structural diagram of still another local region of an encasing device according to some embodiments of this application.

### List of reference numerals:

100. encasing device;
10. first bracket; 20. first flipping mechanism; 30. first conveying sliding table; 40. second conveying sliding table; 50. gripping mechanism; 60. relocation mechanism; 70. detection mechanism; 80. riveting mechanism; 90. second flipping mechanism;
11. riveting platform; 21. second bracket; 22. fixing plate; 23. clamping assembly; 24. flipping assembly; 31. drag chain; 32. conveying plate; 51. gripping piece; 52. first moving assembly; 53. second moving assembly; 62. second pressing mechanism; 63. transfer mechanism;
611. first pressing assembly; 612. second pressing assembly; 221. fixing jaw; 511. limiting groove.

### DETAILED DESCRIPTION

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The term "include", "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a directional or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a directional or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the expansion of the application fields of the power batteries.

A power battery includes a cell module and a battery shell. A production process of the power battery includes a series of steps such as assembling the cell module and a battery shell together, detecting dimensions after assembling, and riveting the cell module to the battery shell.

In the related art, the overall structure of the equipment configured to assemble the battery shell and the cell module together is redundant and large, thereby leading to low space utilization, low efficiency of assembling the battery shell and the cell module, and high cost of labor and material for mounting, commissioning, and routine maintenance of the equipment.

To solve the problems that the equipment for assembling the battery shell and the cell module occupies a relatively large space and the efficiency of assembling the battery shell and the cell module is low, this application provides an encasing device. In the encasing device, various mechanical components involved in a process of assembling the battery shell and the cell module are arranged reasonably, and the gripping mechanism and relocation mechanism configured to assemble the battery shell and the cell module are integrated on the first bracket, thereby improving the efficiency of assembling the battery shell and the cell module.

The encasing device 100 disclosed in an embodiment of this application is applicable not only to the assembling of a power battery in a new energy vehicle, but also to the assembling of power batteries in equipment such as airplanes and ships.

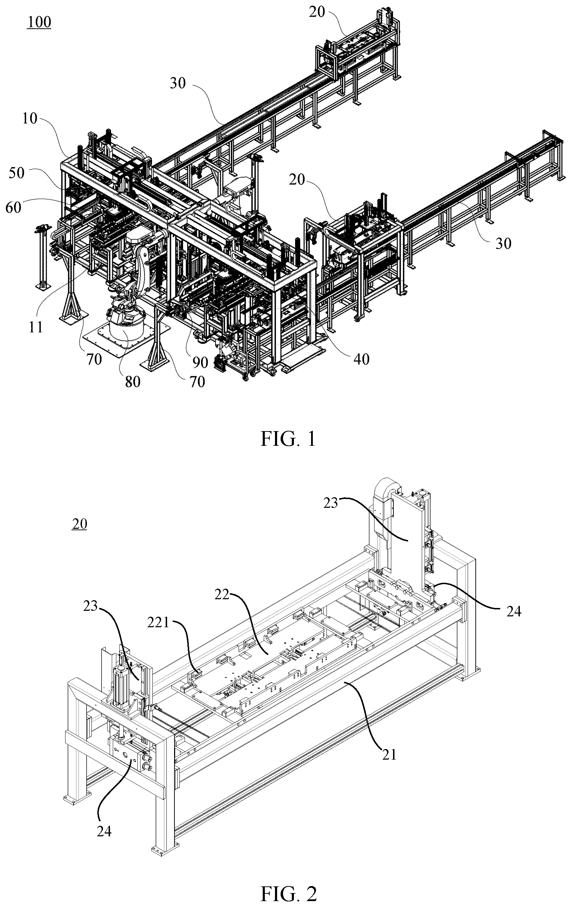

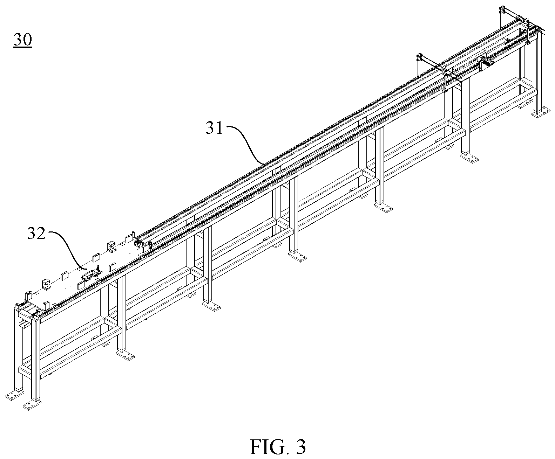

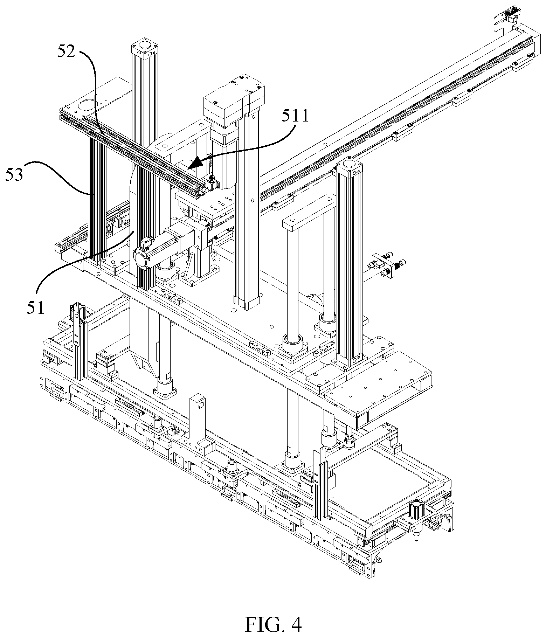

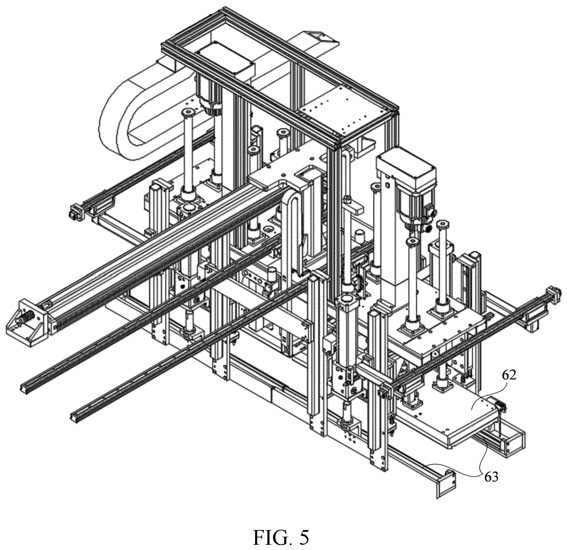

Referring to FIG. 1 to FIG. 5, FIG. 1 is a schematic structural diagram of an encasing device according to some embodiments of this application; FIG. 2 is a schematic structural diagram of a first flipping mechanism according to some embodiments of this application; FIG. 3 is a schematic structural diagram of a first conveying sliding table according to some embodiments of this application; FIG. 4 is a schematic structural diagram of a local region of an encasing device according to some embodiments of this application; and FIG. 5 is a schematic structural diagram of another local region of an encasing device according to some embodiments of this application. According to some embodiments of this application, this application provides an encasing device 100, including: a first bracket 10, a first flipping mechanism 20, a first conveying sliding table 30, a second conveying sliding table 40, a gripping mechanism 50, and a relocation mechanism 60. A riveting platform 11 is disposed on the first bracket 10. The first flipping mechanism 20 is configured to flip a battery shell. The first conveying sliding table 30 is disposed between the first flipping mechanism 20 and the first bracket 10 and configured to convey the flipped battery shell to a grip site on the first bracket 10. The second conveying sliding table 40 is disposed on the first bracket 10 and configured to convey the cell module to the riveting platform 11. The gripping mechanism 50 is disposed on the first bracket 10 and includes a moving mechanism and a gripping piece 51 connected to the moving mechanism. The gripping piece 51 is configured to grip the battery shell from the grip site. The moving mechanism is adapted to drive the gripping piece 51 and the battery shell to move from the grip site to a position above the riveting platform 11. The relocation mechanism 60 is disposed on the first bracket 10. The relocation mechanism 60 is adapted to drive the battery shell to move toward a cell module and fit the cell module into the battery shell.

In this embodiment, before the first flipping mechanism 20 flips the battery shell, the battery shell is cleaned first. After completion of cleaning, a binder is applied inside the battery shell. Before the battery shell is flipped, the opening of the battery shell faces upward. The cell module includes a plurality of battery cells. Adjacent battery cells are bonded to each other.

The first flipping mechanism 20 flips the battery shell until the opening faces downward, and then the first conveying sliding table 30 conveys the battery shell to the grip site of the first bracket 10. Subsequently, the gripping piece 51 grips the battery shell from the grip site. The gripping piece 51 and the battery shell are moved to a position above the riveting platform 11 as driven by the moving mechanism. At this time, the second conveying sliding table 40 conveys the cell module to the riveting platform 11. The battery shell moves toward the cell module as driven by the relocation mechanism 60, and finally wraps around the cell module, thereby assembling the battery shell and the cell module together. In the encasing device 100 disclosed herein, various mechanical components involved in a process of assembling the battery shell and the cell module are arranged reasonably, and the gripping mechanism 50 and relocation mechanism 60 configured to assemble the battery shell and the cell module are integrated on the first bracket 10, thereby not only making the overall structure of the device compact and reducing the space occupied by the encasing device 100, but also improving the efficiency of assembling the battery shell and the cell module.

Referring to FIG. 2, according to some embodiments of this application, the first flipping mechanism 20 includes: a second bracket 21, a fixing assembly, a clamping assembly 23, and a flipping assembly 24. The fixing assembly is disposed in the middle of the second bracket 21 and configured to fix the battery shell. The clamping assemblies 23 are disposed at two opposite ends of the second bracket 21 respectively, and configured to clamp the battery shell and drive the battery shell to rise or fall. The flipping assembly 24 is disposed on the second bracket 21, and configured to drive the fixing assembly to flip over and drive the battery shell to flip over.

The fixing assembly includes a fixing plate 22 and fixing jaws 221 that are disposed on two opposite sides of the fixing plate 22. The fixing jaws 221 are configured to fix the battery shell to prevent the battery shell from falling off during the flipping. The clamping assembly 23 includes a first clamping plate, a second clamping plate, a first lifting sliding table connected to the first clamping plate, a second lifting sliding table connected to the second clamping plate, a first driving piece connected to the first lifting sliding table, and a second driving piece connected to the second lifting sliding table. The first driving piece and the second driving piece are configured to drive the first clamping plate and the second clamping plate to move closer to or away from each other to clamp the battery shell, and configured to drive the first lifting sliding table and the second lifting sliding table to run and drive the first clamping plate and the second clamping plate to rise or fall, so as to move the battery shell to a position above the first bracket 10. The first flipping mechanism 20 includes a first flip driving piece and a second flip driving piece disposed on two opposite sides of the first bracket 10 respectively. The first flip driving piece is connected to a first transmission piece. The first transmission piece is rotatably connected to the first clamping plate. The second flip driving piece is connected to a second transmission piece. The second transmission piece is rotatably connected to the second clamping plate. The first transmission piece and the second transmission piece are configured to be connected to the two sides of the fixing plate 22 respectively, and drive the fixing plate 22 and the battery shell to flip over as driven by the first flip driving piece and the second flip driving piece, thereby flipping the battery shell until the opening faces downward.

In an initial state, the opening of the battery shell faces upward. After the battery shell is fixed by the fixing assembly on the first bracket 10, the two opposite sides of the battery shell are clamped by the clamping assembly 23, and the battery shell is driven to move upward. Subsequently, by using the flipping assembly 24, the battery shell is flipped until the opening of the battery shell faces downward, so as to make it convenient to assemble the battery shell and the cell module together.

Referring to FIG. 3, according to some embodiments of this application, the first conveying sliding table 30 includes a slide driving piece, a gear mechanism connected to the slide driving piece, and a drag chain 31 connected to the gear mechanism. A conveying plate 32 is disposed above the drag chain 31. When driving the gear mechanism to run, the slide driving piece drives the drag chain 31 to move. At this time, the drag chain 31 drives the conveying plate 32 to move toward the grip site of the first bracket 10.

Specifically, supporting blocks for fixing the battery shell are disposed on two opposite sides of the conveying plate 32.

Referring to FIG. 4, according to some embodiments of this application, the moving mechanism includes a first moving assembly 52 and a second moving assembly 53. The first moving assembly 52 is disposed on the first bracket 10, and adapted to move relative to the first bracket 10 along a horizontal direction. The second moving assembly 53 is connected to the first moving assembly 52, and adapted to move relative to the first moving assembly 52 along a vertical direction. The second moving assembly 53 is connected to the gripping piece 51. The first moving assembly 52 and the second moving assembly 53 are adapted to drive the gripping piece 51 and the battery shell to move to the riveting platform 11, and drive the battery shell to descend until the battery shell wraps around the cell module.

In this embodiment, the first moving assembly 52 includes a first movement driving piece and a horizontal slide rail assembly connected to the first movement driving piece. The second moving assembly 53 includes a second movement driving piece and a vertical slide rail assembly connected to the second movement driving piece.

The first moving assembly 52 and the second moving assembly 53 are disposed on the first bracket 10, the second moving assembly 53 is connected to the first moving assembly 52, and the gripping piece 51 is disposed on the second moving assembly 53. In this way, upon completion of the gripping piece 51 gripping the battery shell, when the first moving assembly 52 moves relative to the first bracket 10 along the horizontal plane, the first moving assembly can drive the second moving assembly 53 and the gripping piece 51 to move horizontally to a position above the riveting platform 11, and then the second moving assembly 53 drives the gripping piece 51 to move downward to a position above the cell module, and finally drives the battery shell to descend until the battery shell wraps around the cell module.

Referring to FIG. 4, according to some embodiments of this application, the gripping piece 51 includes a hollow channel. The hollow channel is configured to be connected to a vacuumizing piece. The gripping piece 51 is constrained by a limiting groove 511. The limiting groove 511 fits dimensions of the battery shell. A side wall surface of the limiting groove 511 is provided with a sucking hole. The sucking hole is configured to suck the battery shell in place during vacuumizing.

The gripping piece 51 includes a limiting groove 511 that fits the dimensions of the battery shell. The battery shell is held in the limiting groove 511 when being gripped. When the gripping piece 51 is held in the limiting groove 511, the sucking hole on the gripping piece 51 can suck the battery shell in place. When the vacuumizing piece creates a vacuum, the sucking hole can let the battery shell open to a specified angle to facilitate assembling with the cell module.

According to some embodiments of this application, the encasing device 100 further includes a jack-up mechanism disposed on the first bracket 10. The jack-up mechanism is configured to jack up the cell module when the cell module is conveyed to the riveting platform 11.

The j ack-up mechanism is located below the second conveying sliding table. When the cell module is conveyed to the riveting platform 11, the jack-up mechanism can jack up the cell module so that the battery shell can wrap around the cell module to facilitate the assembling of the cell module into the battery shell.

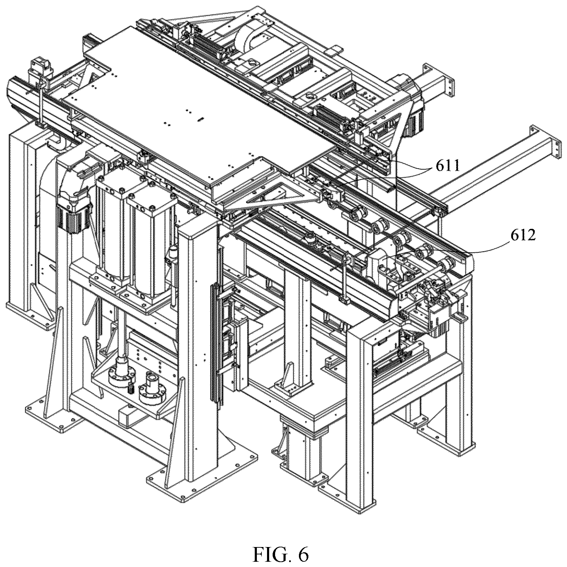

Referring to FIG. 5 and FIG. 6, FIG. 6 is a schematic structural diagram of still another local region of an encasing device according to some embodiments of this application. According to some embodiments of this application, the relocation mechanism 60 further includes a first pressing mechanism and a second pressing mechanism 62. The first pressing mechanism includes a first pressing assembly 611 and a second pressing assembly 612. The first pressing assembly 611 is configured to press the battery shell along a first direction on a horizontal plane (that is, the width direction of the battery shell) after the battery shell and the cell module are assembled together. The second pressing assembly 612 is configured to press the battery shell along a second direction on the horizontal plane (that is, the length direction of the battery shell) after the battery shell and the cell module are assembled together. The second pressing mechanism 62 is configured to press the cell module along a vertical direction after the battery shell and the cell module are assembled together. The first direction is perpendicular to the second direction.

When the battery shell wraps around the cell module, the first pressing assembly presses both sides of the battery shell along the first direction on the horizontal plane, and the second pressing assembly presses both sides of the battery shell separately along the second direction on the horizontal plane, and then the second pressing mechanism 62 presses the battery shell along the vertical direction, so as to implement relative fixation between the cell module and the battery shell and prevent the cell module from falling off from the battery shell in subsequent processes.

Referring to FIG. 1, according to some embodiments of this application, the encasing device 100 further includes a detection mechanism 70. The detection mechanism 70 is disposed on one side of the riveting platform 11 and configured to detect dimensions of the battery shell assembled with the cell module.

In these embodiments, as an example, the detection mechanism is a visual detection mechanism.

The detection mechanism 70 is configured to detect outline dimensions of the battery shell that is assembled with the cell module by the first pressing assembly and the second pressing assembly, so as to control the dimensions of the battery shell within a preset range.

Referring to FIG. 1, according to some embodiments of this application, the encasing device 100 further includes a riveting mechanism 80. The riveting mechanism 80 is disposed on one side of the riveting platform 11 and configured to rivet the battery shell and the cell module together.

In these embodiments, as an example, the riveting mechanism 80 is a riveting robot.

The riveting mechanism 80 is located on one side of the riveting platform 11 and configured to rivet and weld the battery shell and the cell module together after the battery shell and the cell module are assembled together and pressed, so as to further improve the reliability of assembling of the cell module.

Referring to FIG. 1, according to some embodiments of this application, the encasing device 100 further includes a second flipping mechanism 90. The second flipping mechanism 90 is disposed on the first bracket 10 and configured to flip the riveted battery shell and cell module.

After the battery shell and the cell module are riveted together, the battery shell is flipped over by the second flipping mechanism 90 so that the opening of the battery shell faces upward for ease of transit to a next process.

Referring to FIG. 5, according to some embodiments of this application, the relocation mechanism 60 further includes a transfer mechanism 63. The transfer mechanism 63 is disposed on the first bracket 10 and configured to transfer the battery shell and cell module riveted together.

When the battery shell is flipped over by the second flipping mechanism 90 to make the opening face upward, the battery shell and cell module assembled together are transferred to a next process by the transfer mechanism 63.

Specifically, a vertical moving mechanism is also disposed on the first bracket 10. When the riveted battery shell and cell module are flipped again by the second flipping mechanism 90, the vertical moving mechanism can move the riveted battery shell and cell module to the transfer mechanism 63, and then the battery shell and cell module are transferred to a next process by the transfer mechanism.

Referring to FIG. 1, according to some embodiments of this application, two first flipping mechanisms 20 and two first conveying sliding tables 30 are provided. The two first flipping mechanisms 20 are disposed on two sides of the first bracket 10 respectively. Each of the two first conveying sliding tables 30 is disposed between a corresponding first flipping mechanism 20 and the first bracket 10.

Two first flipping mechanisms 20 and two first conveying sliding tables 30 are disposed, each located on two sides of the first bracket 10. In this way, the assembling is performed in two workspaces simultaneously without mutual interference, thereby further improving production efficiency, and at the same time, further reducing the space occupied by the encasing device 100.

Referring to FIG. 1 to FIG. 5, according to some embodiments of this application, this application provides an encasing device 100, including: a first bracket 10, a first flipping mechanism 20, a first conveying sliding table 30, a second conveying sliding table 40, a gripping mechanism 50, a relocation mechanism 60, a jack-up mechanism, a detection mechanism 70, and a riveting mechanism 80. A riveting platform 11 and a grip site are disposed on the first bracket 10. The first flipping mechanism 20 is configured to flip a battery shell until the opening of the battery shell faces downward. The first conveying sliding table 30 is disposed between the first flipping mechanism 20 and the first bracket 10 and configured to convey the flipped battery shell to a grip site on the first bracket 10. The second conveying sliding table 40 is disposed on the first bracket 10 and configured to convey the cell module to the riveting platform 11. The gripping mechanism 50 is disposed on the first bracket 10 and includes a moving mechanism and a gripping piece 51 connected to the moving mechanism. The gripping piece 51 is configured to grip the battery shell from the grip site. The moving mechanism is configured to move the battery shell to move from the grip site to a position above the riveting platform 11. The relocation mechanism 60 is disposed on the first bracket 10. The relocation mechanism 60 is adapted to drive the battery shell to move toward a cell module and fit the cell module into the battery shell. The detection mechanism 70 is disposed on one side of the riveting platform 11 and configured to detect dimensions of the battery shell assembled with the cell module. The riveting mechanism 80 is also disposed on one side of the riveting platform 11 and configured to rivet the battery shell and the cell module together. The second flipping mechanism 90 is disposed on the first bracket 10 and configured to flip the riveted battery shell and cell module so that the opening of the battery shell faces upward.

Further, the relocation mechanism 60 further includes a transfer mechanism 63. The transfer mechanism 63 is disposed on the first bracket 10 and configured to transfer the riveted battery shell and cell module to a next process.

Described above are merely specific exemplary embodiments of this application, and the protection scope of this application is not limited to such embodiments. Any and all variations or replacements easily conceivable by a person skilled in the art within the technical scope disclosed herein still fall within the protection scope of this application. Therefore, the protection scope of this application is subject to the protection scope of the claims.

## Claims

1. An encasing device, **characterized in that** the encasing device comprises:
a first bracket, wherein a riveting platform is disposed on the first bracket;
a first flipping mechanism, configured to flip a battery shell;
a first conveying sliding table, wherein the first conveying sliding table is disposed between the first flipping mechanism and the first bracket and configured to convey the flipped battery shell to a grip site on the first bracket;
a gripping mechanism, disposed on the first bracket, wherein the gripping mechanism comprises a moving mechanism and a gripping piece connected to the moving mechanism, the gripping piece is configured to grip the battery shell from the grip site, and the moving mechanism is adapted to drive the gripping piece and the battery shell to move from the grip site to a position above the riveting platform; and
a relocation mechanism, disposed on the first bracket, wherein the relocation mechanism is adapted to drive the battery shell to move toward a cell module and fit the cell module into the battery shell.

2. The encasing device according to claim 1, **characterized in that** the encasing device further comprises:
a second conveying sliding table, disposed on the first bracket and configured to convey the cell module to the riveting platform.

3. The encasing device according to claim 1 or 2, **characterized in that** the first flipping mechanism comprises:
a second bracket;
a fixing assembly, disposed on the second bracket and configured to fix the battery shell;
clamping assemblies, disposed at two opposite ends of the second bracket respectively, and configured to clamp the battery shell and drive the battery shell to rise or fall; and
a flipping assembly, disposed on the second bracket, and configured to drive the fixing assembly to flip over and drive the battery shell to flip over.

4. The encasing device according to any one of claims 1 to 3, **characterized in that** the moving mechanism comprises:
a first moving assembly, disposed on the first bracket, and adapted to move relative to the first bracket along a horizontal direction; and
a second moving assembly, connected to the first moving assembly, and adapted to move relative to the first moving assembly along a vertical direction, wherein the second moving assembly is connected to the gripping piece; and
the first moving assembly and the second moving assembly are adapted to drive the gripping piece and the battery shell to move to the riveting platform, and drive the battery shell to descend until the battery shell wraps around the cell module.

5. The encasing device according to any one of claims 1 to 4, **characterized in that**
the gripping piece comprises a hollow channel, the hollow channel is configured to be connected to a vacuumizing piece, the gripping piece is constrained by a limiting groove, the limiting groove fits dimensions of the battery shell, a side wall surface of the limiting groove is provided with a sucking hole, and the sucking hole is configured to suck the battery shell in place during vacuumizing.

6. The encasing device according to any one of claims 1 to 5, **characterized in that** the encasing device further comprises a jack-up mechanism, wherein the jack-up mechanism is disposed on the first bracket and configured to jack up the cell module when the cell module is conveyed to the riveting platform.

7. The encasing device according to any one of claims 1 to 6, **characterized in that** the relocation mechanism further comprises:
a first pressing mechanism, comprising a first pressing assembly and a second pressing assembly, wherein the first pressing assembly is configured to press the battery shell along a first direction on a horizontal plane after the battery shell and the cell module are assembled together, and the second pressing assembly is configured to press the battery shell along a second direction on the horizontal plane after the battery shell and the cell module are assembled together; and
a second pressing mechanism, configured to press the cell module along a vertical direction after the battery shell and the cell module are assembled together, wherein
the first direction is perpendicular to the second direction.

8. The encasing device according to any one of claims 1 to 7, **characterized in that** the encasing device further comprises:
a detection mechanism, configured to detect dimensions of the battery shell assembled with the cell module.

9. The encasing device according to any one of claims 1 to 8, **characterized in that** the encasing device further comprises:
a riveting mechanism, wherein the riveting mechanism is disposed on one side of the riveting platform, and configured to rivet the battery shell and the cell module together.

10. The encasing device according to any one of claims 1 to 9, **characterized in that** the encasing device further comprises:
a second flipping mechanism, disposed on the first bracket, wherein the second flipping mechanism is configured to flip the battery shell and cell module riveted together.

11. The encasing device according to any one of claims 1 to 10, **characterized in that** the relocation mechanism further comprises:
a transfer mechanism, disposed on the first bracket, and configured to transfer the battery shell and cell module riveted together.

12. The encasing device according to any one of claims 1 to 11, **characterized in that** two first flipping mechanisms and two first conveying sliding tables are provided, the two first flipping mechanisms are disposed on two sides of the first bracket respectively, and each of the two first conveying sliding tables is disposed between a corresponding first flipping mechanism and the first bracket.
